# EUROPÄISCHE PATENTSCHRIFT

(11) **EP 2 926 034 B1**
(45) Veröffentlichungstag und Bekanntmachung des Hinweises auf die Patenterteilung: **05.06.2019**
(21) Anmeldenummer: 13798570.1
(22) Anmeldetag: 15.11.2013
(51) Int. Cl.: F16H 41/28, B23K 20/12

(54) **ANTRIEBSSTRANGVORRICHTUNG FÜR EIN KRAFTFAHRZEUG UND HERSTELLVERFAHREN FÜR EINE ANTRIEBSSTRANGVORRICHTUNG**
DRIVE TRAIN DEVICE FOR A MOTOR VEHICLE AND PRODUCTION PROCESS FOR A DRIVE TRAIN DEVICE
DISPOSITIF DE CHAÎNE CINÉMATIQUE POUR UN VÉHICULE AUTOMOBILE ET PROCÉDÉ DE FABRICATION D'UN DISPOSITIF DE CHAÎNE CINÉMATIQUE

(30) Priorität: 28.11.2012 DE 102012023156
(43) Veröffentlichungstag der Anmeldung: 07.10.2015
(73) Patentinhaber: Daimler AG, 70327 Stuttgart (DE)
(72) Erfinder: BIETENBECK, Hans-Josef, 71404 Korb (DE); HEUKELBACH, Kai, 73257 Köngen (DE); KOPPITZ, Bernd, 73650 Winterbach (DE); LECHTHALER, Thomas, 70178 Stuttgart (DE); SCHUSTER, Tobias, 73733 Esslingen (DE); ZIEGLER, Bernhard, 73098 Rechberghausen (DE)
(74) Vertreter: JENSEN & SON
(86) Internationale Anmeldenummer: PCT/EP2013/003454
(87) Internationale Veröffentlichungsnummer: WO 2014/082713

(56) Entgegenhaltungen:
- EP-A1- 0 022 071
- GB-A- 528 616
- GB-A- 2 285 005
- JP-A- 2009 168 116
- US-A- 2 839 826

## Beschreibung

Die Erfindung betrifft eine Antriebsstrangvorrichtung nach dem Oberbegriff des Anspruchs 1 und ein Herstellverfahren nach dem Oberbegriff des Anspruchs 9.

Aus der EP 1 900 468 A2 ist bereits eine Antriebsstrangvorrichtung für ein Kraftfahrzeug, mit einem ersten Bauteil, einem drehmomentübertragend mit dem ersten Bauteil verbundenen zweiten Bauteil, das aus einem als Leichtmetall ausgebildeten Material besteht, und einem in das zweite Bauteil eingegossenen Element, das aus einem eisenhaltigen Material besteht, bekannt.

Aus der gattungsgemäßen US 2 839 826 A ist ebenfalls eine Antriebsstrangvorrichtung für ein Kraftfahrzeug, mit einem ersten Bauteil, einem drehmomentübertragend mit dem ersten Bauteil verbundenen zweiten Bauteil, das zumindest im Wesentlichen aus einem als Leichtmetall ausgebildeten Material besteht, und zumindest einem wenigstens teilweise in das zweite Bauteil eingeschlossenen Element, das zumindest im Wesentlichen aus einem überwiegend eisenhaltigen Material besteht, bekannt. Weiterhin ist durch diese Schrift gezeigt, dass das eingeschlossene Element als ein Verbindungselement ausgebildet ist, welches zur Herstellung der drehmomentübertragenden Verbindung mit dem ersten Bauteil stoffschlüssig verbunden ist. Zudem zeigt die Schrift, dass das erste Bauteil und/oder das zweite Bauteil zumindest teilweise ein Gehäuse ausbilden.

Der Erfindung liegt insbesondere die Aufgabe zugrunde, eine Antriebsstrangvorrichtung in Leichtbauweise wirtschaftlich herzustellen. Diese Aufgabe wird durch eine erfindungsgemäße Antriebsstrangvorrichtung entsprechend dem Anspruch 1 und ein Herstellverfahren entsprechend dem Anspruch 7 gelöst. Weiterbildungen der Erfindung ergeben sich aus den abhängigen Ansprüchen.

Die Erfindung geht aus von einer Antriebsstrangvorrichtung für ein Kraftfahrzeug, mit einem ersten Bauteil, einem drehmomentübertragend mit dem ersten Bauteil verbundenen zweiten Bauteil, das zumindest im Wesentlichen aus einem als Leichtmetall ausgebildeten Material besteht, und zumindest einem wenigstens teilweise in das zweite Bauteil eingeschlossenen Element, das zumindest im Wesentlichen aus einem überwiegend eisenhaltigen Material besteht. Mit "eingeschlossen" ist eingegossen oder eingeschmiedet gemeint.

Weiterhin wird davon ausgegangen, dass das eingeschlossene Element als ein Verbindungselement ausgebildet ist, welches zur Herstellung der drehmomentübertragenden Verbindung mit dem ersten Bauteil stoffschlüssig verbunden ist. Dadurch können die Bauteile über das eingeschlossene Element miteinander verbunden werden, wodurch das erste Bauteil und das zweite Bauteil aus verschiedenen Materialien hergestellt werden können. Das erste Bauteil kann besonders vorteilhaft zumindest im Wesentlichen aus einem überwiegend eisenhaltigen Material bestehen, wobei durch die stoffschlüssige Verbindung mit dem eingeschlossenen Element das zumindest im Wesentlichen aus dem als Leichtmetall ausgebildeten Material bestehende zweite Bauteil und das zumindest im Wesentlichen aus dem überwiegend eisenhaltigen Material bestehende erste Bauteil mittels einer Verbindung zwischen gleichen Materialien verbunden werden können. Durch die stoffschlüssige Verbindung des eingeschlossenen Elements mit dem ersten Bauteil kann auf eine aufwendige und kostenintensive Verbindungstechnik, wie insbesondere Schrauben, Nieten und Schweißnieten, verzichtet werden, wodurch Kosten der Antriebsstrangvorrichtung in Leichtbauweise reduziert werden können. Dadurch können zumindest zwei Bauteile der Antriebsstrangvorrichtung, wobei eines der Bauteile aus dem als Leichtmetall ausgebildeten Material besteht, besonders kostengünstig drehmomentübertragend miteinander verbunden werden, wodurch eine Antriebsstrangvorrichtung in Leichtbauweise wirtschaftlich hergestellt werden kann. Unter einem "eingeschlossenen Element" soll insbesondere ein Element verstanden werden, das durch einen Gießvorgang oder einen Schmiedevorgang des zweiten Bauteils mit dem zweiten Bauteil formschlüssig verbunden wird. Das Verbindungselement ist vorteilhaft ringförmig ausgebildet, wodurch die Verbindung zwischen dem zweiten Bauteil und dem eingeschlossenen Element zuverlässiger gestaltet werden kann. Das erste Bauteil besteht vorzugsweise zumindest im Wesentlichen aus einem überwiegend eisenhaltigen Material, wodurch die stoffschlüssige Verbindung zwischen dem in dem zweiten Bauteil eingeschlossenen Element und dem ersten Bauteil zuverlässiger gestaltet werden kann. Vorzugsweise sind das in das zweite Bauteil eingeschlossene Element und das erste Bauteil miteinander verschweißt und/oder verlötet. Unter "im Wesentlichen" soll insbesondere zumindest zu 60%, vorteilhaft zumindest zu 80% und besonders vorteilhaft zumindest zu 90% verstanden werden. Unter einem "Leichtmetall" soll insbesondere ein Metall und/oder eine Legierung verstanden werden, deren Dichte unter 5g/cm³ liegt, wie insbesondere Aluminium.

Weiterhin wird davon ausgegangen, dass das erste Bauteil und/oder das zweite Bauteil zumindest teilweise ein Gehäuse ausbilden. Dadurch können weitere Bauteile innerhalb des ersten Bauteils und des zweiten Bauteils montagefreundlich angeordnet werden, wodurch ein montagefreundliches Gehäuse in Leichtbauweise kostengünstig hergestellt werden kann. Durch die stoffschlüssige Verbindung des eingeschlossenen Elements mit dem ersten als Gehäuse ausgebildeten Bauteil kann eine aufwendige Einstellung eines Axialspiels zwischen dem ersten als Gehäuse ausgebildeten Bauteil und dem zweiten als Gehäuse ausgebildeten Bauteil vermieden werden, wobei insbesondere bei Montage des Gehäuses auf Ausgleichselemente, die beispielsweise bei einer Schraubverbindung notwendig sind, verzichtet werden kann. Durch die stoffschlüssige Verbindung kann ferner auf Dichtungen zwischen dem ersten Bauteil und dem zweiten Bauteil verzichtet werden, wodurch Kosten reduziert und die Montage vereinfacht werden können. Unter einem "Gehäuse" soll insbesondere ein Bauteil verstanden werden, dass zumindest ein weiteres Bauteil der Antriebsstrangvorrichtung wenigstens teilweise umgibt und/oder aufnimmt.

Erfindungsgemäß wird vorgeschlagen, dass das eingeschlossene Element axial beidseitig aus dem Material des zweiten Bauteils herausragt und zumindest eine axial aus dem Material des zweiten Bauteils herausragende Seite des eingeschlossenen Elements wenigstens ein Wuchtelement und/oder wenigstens eine Wuchtausnehmung aufweist, so dass eine Unwucht besonders kostengünstig zu beseitigen ist. Dadurch kann ein positives Wuchten, bei dem zusätzliches Wuchtmaterial aufgebracht wird, und ein negatives Wuchten, bei dem ein Wuchtmaterial abgetragen wird, mit Hilfe des eingeschlossenen Elements realisiert werden, wodurch ein Auswuchten besonders einfach durchgeführt werden kann. Der Begriff "axial" ist insbesondere auf eine Rotationsachse des ersten Bauteils und/oder des zweiten Bauteils bezogen, sodass der Ausdruck "axial" eine Richtung bezeichnet, die auf der Rotationsachse oder zumindest im Wesentlichen parallel zu dieser verläuft. Unter "im Wesentlichen parallel" soll insbesondere eine Abweichung von einem parallelen Verlauf verstanden werden, die maximal 20 Grad, vorteilhaft maximal 10 Grad und besonders vorteilhaft maximal 5 Grad beträgt.

Insbesondere ist es vorteilhaft, wenn das eingeschlossene Element zumindest eine Materialfehlstelle aufweist, die in einem eingeschlossenen Zustand von dem Material des zweiten Bauteils zumindest im Wesentlichen ausgefüllt ist, wodurch eine besonders zuverlässige formschlüssige Verbindung zwischen dem zweiten Bauteil, das zur Reduzierung eines Gewichts zumindest im Wesentlichen aus einem als Leichtmetall ausgebildeten Material besteht, und dem eingeschlossenen Element, das zumindest im Wesentlichen aus einem überwiegend eisenhaltigen Material besteht, bereitgestellt werden kann.

Um eine Schmierung und/oder Kühlung zu verbessern ist es weiter vorteilhaft, wenn das zweite Bauteil zumindest teilweise eine Schöpfvorrichtung ausbildet, die dazu vorgesehen ist, ein Schmier- und/oder Kühlmittel zu schöpfen, wodurch das Schmier- und/oder Kühlmittel ohne kostenintensive Pumpen geschöpft und/oder befördert werden kann. Durch eine Integration der Schöpfvorrichtung in das zweite Bauteil kann eine Herstellung der Schöpfvorrichtung vereinfacht und/oder erst realisiert werden. Unter "vorgesehen" soll insbesondere speziell ausgelegt, ausgestattet und/oder angeordnet verstanden werden. Unter "einstückig" soll insbesondere in und/oder aus einem Stück geformt verstanden werden, wie insbesondere durch eine Herstellung aus einem Guss.

Ferner ist es vorteilhaft, wenn die Schöpfvorrichtung radial außerhalb des eingeschlossenen Elements angeordnet ist, wodurch das Schmier- und/oder Kühlmittel vorteilhaft geschöpft werden kann. Der Begriff "radial" ist insbesondere auf die Rotationsachse des ersten Bauteils und/oder des zweiten Bauteils bezogen, sodass der Ausdruck "radial" eine Richtung bezeichnet, die zumindest im Wesentlichen senkrecht zur Rotationsachse verläuft. Unter "im Wesentlichen senkrecht" soll insbesondere eine Abweichung von einem senkrechten Verlauf verstanden werden, die maximal 20 Grad, vorteilhaft maximal 10 Grad und besonders vorteilhaft maximal 5 Grad beträgt.

In einer weiteren erfindungsgemäßen Ausgestaltung bildet das erste Bauteil zumindest teilweise ein Pumpenrad eines Drehmomentwandlers aus. Dadurch kann das Pumpenrad des Drehmomentwandlers besonders zuverlässig mit dem zweiten Bauteil, das zumindest teilweise aus dem als Leichtmetall ausgebildeten Material besteht, verbunden werden, wodurch ein Drehmomentwandler in Leichtbauweise kostengünstig hergestellt werden kann.

Insbesondere ist es vorteilhaft, wenn das zweite Bauteil zumindest teilweise einen Außenlamellenträger ausbildet. Dadurch kann der Außenlamellenträger besonders zuverlässig mit dem ersten Bauteil, das insbesondere zumindest im Wesentlichen aus einem überwiegend eisenhaltigen Material besteht, verbunden werden, wodurch eine Kopplungsvorrichtung in Leichtbauweise kostengünstig hergestellt werden kann. Bildet das erste Bauteil zumindest teilweise das Pumpenrad des Drehmomentwandlers und das zweite Bauteil zumindest teilweise den Außenlamellenträger aus, kann dadurch ein kostengünstiger Drehmomentwandler mit einer Wandlerüberbrückungskupplung in Leichtbauweise bereitgestellt werden.

Weiter wird ein Herstellverfahren für eine erfindungsgemäße Antriebsstrangvorrichtung vorgeschlagen, bei dem ein erstes Bauteil und ein zweites Bauteil, das zumindest teilweise aus einem als Leichtmetall ausgebildeten Material hergestellt ist, drehmomentübertragend miteinander verbunden werden und zumindest ein zumindest teilweise aus einem überwiegend eisenhaltigen Material hergestelltes Element in das erste Bauteil zumindest teilweise eingeschlossen wird, wobei zur Herstellung der drehmomentübertragenden Verbindung das erste Bauteil und das eingeschlossene Element stoffschlüssig miteinander verbunden werden. Dadurch können Herstellkosten zur Herstellung der in Leichtbauweise ausgeführten Antriebsstrangvorrichtung eingespart werden.

Zur Vereinfachung einer Montage wird für das Herstellverfahren weiter vorgeschlagen, dass das erste Bauteil und/oder das zweite Bauteil wenigstens ein drittes Bauteil aufnehmen, wobei nach einer Vormontage des wenigstens einen dritten Bauteils ein Axialspiel zwischen dem ersten Bauteil und dem zweiten Bauteil eingestellt wird und unter Verzicht von Ausgleichselementen das erste Bauteil und das eingeschlossene Element stoffschlüssig miteinander verbunden werden, wodurch Montagekosten eingespart werden können.

Weitere Vorteile ergeben sich aus der folgenden Figurenbeschreibung. In den Figuren sind zwei Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: teilweise und schematisiert eine Antriebstrangvorrichtung mit einem als Pumpenrad eines Drehmomentwandlers ausgebildeten ersten Bauteil, einem als Außenlamellenträger einer Trennkupplung ausgebildeten zweiten Bauteil und einem in das zweite Bauteil eingegossenen Element, das stoffschlüssig mit dem ersten Bauteil verbunden ist,
- Fig.2: die Antriebsstrangvorrichtung im Bereich des eingegossenen Elements,
- Fig.3: das eingegossene Element,
- Fig.4: eine Antriebsstrangvorrichtung mit einem alternativ ausgebildeten eingegossenen Element und
- Fig. 5: das alternativ ausgebildete eingegossene Element.

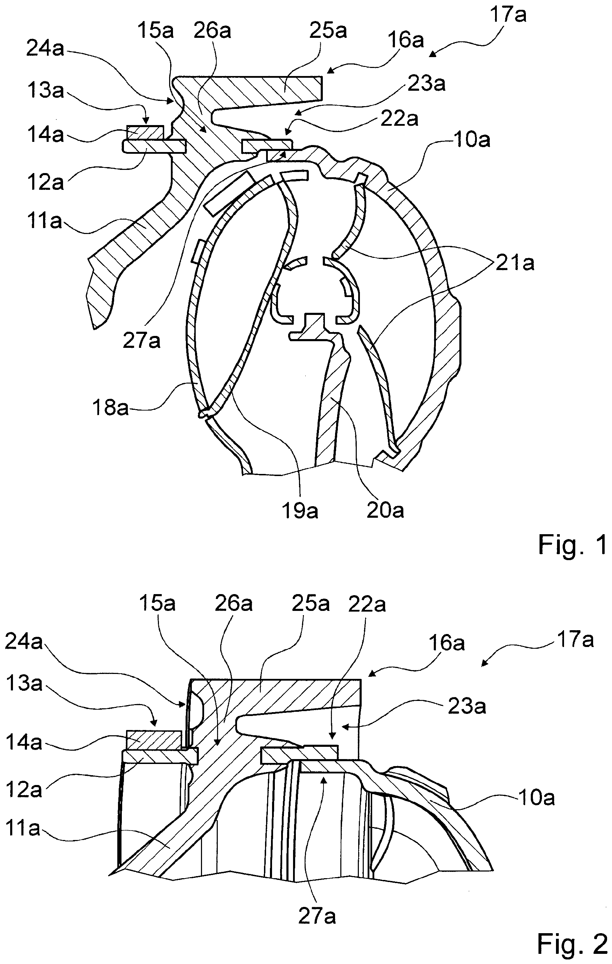

Die Figuren 1 bis 3 zeigen eine Antriebsstrangvorrichtung für ein Kraftfahrzeug, die für einen Antriebsstrang des Kraftfahrzeugs vorgesehen ist. Die Antriebsstrangvorrichtung weist ein Automatikgetriebe und einen hydraulischen Drehmomentwandler 17a mit einer Wandlerüberbrückungskupplung auf. Der Drehmomentwandler 17a weist dabei ein Pumpenrad, ein Turbinenrad und ein Leitrad auf. Die Wandlerüberbrückungskupplung weist einen Außenlamellenträger, der drehfest mit dem Pumpenrad verbunden ist, und einen Innenlamellenträger, der drehfest mit dem Turbinenrad verbunden ist, auf.

Die Antriebsstrangvorrichtung weist weiter ein erstes Bauteil 10a und ein zweites Bauteil 11a auf, die drehmomentübertragend miteinander verbunden sind. Zur Aufnahme des ersten Bauteils 10a und des zweiten Bauteils 11a weist die Antriebsstrangvorrichtung ein nicht näher dargestelltes Gehäuse auf, innerhalb dessen das erste Bauteil 10a und das zweite Bauteil 11a angeordnet sind. Das erste Bauteil 10a und das zweite Bauteil 11a sind dabei relativ zu dem nicht dargestellten Gehäuse drehbar gelagert. Um eine Leichtbauweise zu realisieren besteht das zweite Bauteil 11a aus einem als Leichtmetall ausgebildeten Material. Das zweite Bauteil 11a besteht aus Aluminium. Dabei ist das zweite Bauteil 11a als ein Gussteil ausgebildet. Das zweite Bauteil 11a ist somit gegossen. Das erste Bauteil 10a besteht aus einem überwiegend eisenhaltigen Material. Das erste Bauteil 10a besteht aus Stahl. Das zweite Bauteil 11a könnte alternativ auch als ein Schmiedeteil ausgebildet sein.

Um das aus Stahl bestehende erste Bauteil 10a und das aus Aluminium bestehende zweite Bauteil 11a miteinander zu verbinden, weist die Antriebsstrangvorrichtung ein Element 12a auf, das in das aus Aluminium bestehende zweite Bauteil 11a eingegossen ist. Alternativ könnte das Element 12a auch in das zweite Bauteil 11a eingeschmiedet sein. Das eingegossene Element 12a besteht aus einem überwiegend eisenhaltigen Material. Es besteht aus Stahl. Durch das Eingießen wird eine formschlüssige Verbindung zwischen dem aus Aluminium bestehenden zweiten Bauteil 11a und dem aus Stahl bestehenden Element 12a bereitgestellt. Das eingegossene Element 12a ist als ein Verbindungselement ausgebildet, das die drehmomentübertragende Verbindung zwischen dem ersten Bauteil 10a und dem zweiten Bauteil 11a herstellt. Dazu sind das erste Bauteil 10a und das in das zweite Bauteil 11a eingegossene Element 12a stoffschlüssig miteinander verbunden. Das eingegossene Element 12a und das erste Bauteil 10a weisen somit eine stoffschlüssige Verbindungsstelle 27a auf. In diesem Ausführungsbeispiel sind das aus Stahl bestehende erste Bauteil 10a und das aus Stahl bestehende eingegossene Element 12a miteinander verschweißt. Sie sind durch eine Schweißverbindung miteinander verbunden. Das aus Stahl bestehende erste Bauteil 10a und das aus Aluminium bestehende zweite Bauteil 11a sind über das in dem zweiten Bauteil 11a eingegossene Element 12a miteinander verbunden. Die stoffschlüssige Verbindungsstelle 27a ist als eine Schweißstelle ausgebildet. Das erste Bauteil 10a und das zweite Bauteil 11a sind mittels einer Stahl-Stahl-Fügung miteinander verbunden. Grundsätzlich können das erste Bauteil 10a und das eingegossene Element 12a alternativ oder zusätzlich miteinander verlötet und/oder verklebt sein. Um Kosten einzusparen kann das eingegossene Element 12a grundsätzlich aus Blechstreifen wie ein Puzzle verbaut werden.

Das eingegossene Element 12a ragt axial beidseitig aus dem Material des zweiten Bauteils 11a heraus. Das eingegossene Element 12a weist eine erste axial aus dem Material des zweiten Bauteils 11a herausragende Seite 22a und eine zweite axial aus dem Material des zweiten Bauteils 11a herausragende Seite 13a auf. Die erste axial herausragende Seite 22a des eingegossenen Elements 12a ist zur stoffschlüssigen Anbindung an das erste Bauteil 10a vorgesehen. Mit der ersten axial herausragenden Seite 22a ist das eingegossene Element 12a mit dem ersten Bauteil 10a stoffschlüssig verbunden. Die axial gegenüberliegende zweite axial herausragende Seite 13a des eingegossenen Elements 12a ist zur Auswuchtung vorgesehen. Die zweite axial herausragende Seite 13a weist zur Auswuchtung ein Wuchtelement 14a auf. Das Wuchtelement 14a ist zur Beseitigung einer Unwucht auf der zweiten axial herausragenden Seite 13a fest auf dem eingegossenen Element 12a angeordnet. Das Wuchtelement 14a ist als ein Wuchtblech ausgebildet. Grundsätzlich kann die zweite axial herausragende Seite 13a zur Auswuchtung zusätzlich oder alternativ wenigstens eine Wuchtausnehmung aufweisen, die als eine Materialwegnahme ausgebildet ist. Weiter ist es grundsätzlich denkbar, dass ein positives Wuchten durch ein CMT-Schweißen auf der zweiten axial herausragenden Seite 13a durchgeführt wird.

Um eine Gussverbindung zwischen dem zweiten Bauteil 11a und dem eingegossenen Element 12a zuverlässiger zu gestalten, weist das eingegossene Element 12a mehrere Materialfehlstellen 15a auf, die in einem eingegossenen Zustand von dem Material des zweiten Bauteils 11a ausgefüllt sind. Die Materialfehlstellen 15a sind dabei axial zwischen den axial herausragenden Seiten 13a, 22a angeordnet. Die Materialfehlstellen 15a sind gleichmäßig um einen Umfang des eingegossenen Elements 12a angeordnet. Sie sind als Bohrungen ausgebildet. Das eingegossene Element 12a ist ringförmig ausgebildet. Es ist als ein Verbindungsring ausgebildet.

Das erste Bauteil 10a und das zweite Bauteil 11a bildet jeweils ein Gehäuse des Drehmomentwandlers 17a aus. Innerhalb des ersten Bauteils 10a und des zweiten Bauteils 11a sind Bauteile 18a, 19a, 20a, 21a des Drehmomentwandlers 17a angeordnet. Das erste Bauteil 10a und das zweite Bauteil 11a sind jeweils als ein Wandlergehäuseteil ausgebildet. Dabei bildet das erste Bauteil 10a einstückig das Pumpenrad des Drehmomentwandlers 17a und das zweite Bauteil 11a einstückig den Außenlamellenträger der Wandlerüberbrückungskupplung aus. Das innerhalb der Bauteile 10a, 11a angeordnete Bauteil 18 ist als das Turbinenrad, die innerhalb der Bauteile 10a, 11a angeordneten Bauteile 19a sind jeweils als eine Turbinenradschaufel, das innerhalb der Bauteile 10a, 11a angeordnete Bauteil 20a ist als das Leitrad und die innerhalb der Bauteile 10a, 11a angeordneten Bauteile 21a sind jeweils als eine Pumpenradschaufel des Drehmomentwandlers 17a ausgebildet. Somit ist der Außenlamellenträger aus Aluminium hergestellt und durch das eingegossene Element 12a mit dem aus Stahl ausgebildeten Pumpenrad des Drehmomentwandlers 17a verbunden, wobei dazu das Pumpenrad und das eingegossene Element 12a miteinander verschweißt sind. Grundsätzlich kann das erste Bauteil 10a mit dem Pumpenrad des Drehmomentwandlers 17a und das zweite Bauteil 11a mit dem Außenlamellenträger der Wandlerüberbrückungskupplung lediglich fest verbunden sein.

Die Antriebsstrangvorrichtung weist weiter eine Schöpfvorrichtung 16a auf, die bei einer Rotation aufgrund einer Adhäsion ein Kühlmittel aus einem Kühlmittelsumpf mitnimmt und damit schöpft. Die Schöpfvorrichtung 16a befördert dabei das Kühlmittel auf ein höheres Niveau, von dem es aufgrund einer Schwerkraft am ersten Bauteil 10a und am zweiten Bauteil 11a wieder abfließt. Das zweite Bauteil 11a bildet einstückig die Schöpfvorrichtung 16a aus. Die Schöpfvorrichtung 16a ist bezüglich einer Rotationsachse des ersten Bauteils 10a und des zweiten Bauteils 11a radial außerhalb des eingegossenen Elements 12a angeordnet. Die Schöpfvorrichtung 16a umgibt die erste axial herausragende Seite 22a des eingegossenen Elements 12a. Das Kühlmittel ist dabei als ein Öl ausgebildet.

Die Schöpfvorrichtung 16a weist eine erste stirnseitige Materialfehlstelle 23a und eine gegenüberliegende zweite stirnseitige Materialfehlstelle 24a auf. Die Materialfehlstellen 23a, 24a bilden Rinnen aus, die in axialer Richtung geöffnet sind. Sie verlaufen dabei jeweils stirnseitig um den Umfang der Schöpfvorrichtung 16a. Die erste Materialfehlstelle 23a ist bezüglich der Rotationsachse radial über der ersten axial herausragenden Seite 22a des eingegossenen Elements 12a angeordnet. Die Materialfehlstellen 23a, 24a weisen unterschiedliche Ausmaße auf. Die erste Materialfehlstelle 23a ist dabei größer ausgebildet als die zweite Materialfehlstelle 24a. Die erste Materialfehlstelle 23a ist axial tiefer als die zweite Materialfehlstelle 24a. Die Materialfehlstellen 23a, 24a sind jeweils durch das Gießen des zweiten Bauteils 11a ausgeformt. Sie sind jeweils ringförmig.

Aufgrund der axial gegenüberliegenden Materialfehlstellen 23a, 24a weist die Schöpfvorrichtung 16a einen Schöpfring 25a und eine Materialeinschnürung 26a auf. Die Materialeinschnürung 26a verbindet das zweite Bauteil 11a und den Schöpfring 25a einstückig miteinander. Der Schöpfring 25a ist dabei radial über der Materialeinschnürung 26a angeordnet. Der Schöpfring 25a und die Materialeinschnürung 26a verlaufen um einen Umfang des zweiten Bauteils 11a. Ausgehend von der Materialeinschnürung 26a weist der Schöpfring 25a unterschiedliche Axialerstreckungen auf. Eine axiale Erstreckung des Schöpfrings 25a ausgehend von der Materialeinschnürung 26a in Richtung der ersten axial herausragenden Seite 22a des eingegossenen Elements 12a ist dabei größer als eine axiale Erstreckung des Schöpfrings 25a ausgehend von der Materialeinschnürung 26a in Richtung der zweiten axial herausragenden Seite 13a des eingegossenen Elements 12a. Der Schöpfring 25a erstreckt sich ausgehend von der Materialeinschnürung 26a axial im Wesentlichen in Richtung der ersten axial herausragenden Seite 22a des eingegossenen Elements 12a. Der Schöpfring 25a überdacht die erste axial herausragende Seite 22a des eingegossenen Elements 12a. Der Schöpfring 25a überdacht damit die stoffschlüssige Verbindungsstelle 27a. Dabei ist die erste axial herausragende Seite 22a des eingegossenen Elements 12a aufgrund der Materialfehlstelle 23a axial zugänglich. Eine Überdachung der zweiten axial herausragenden Seite 13a des eingegossenen Elements 12a durch den Schöpfring 25a fehlt. Es fehlt damit eine Überdachung des Wuchtelements 14a durch den Schöpfring 25a. In einem Schnitt entlang der Rotationsachse weist die Schöpfvorrichtung 16a eine Ambossform auf. Dabei erstreckt sich der radial über der Materialeinschnürung 26a angeordnete Schöpfring 25a axial im Wesentlichen in Richtung der ersten axial herausragenden Seite 22a des eingegossenen Elements 12a.

In einem Herstellverfahren zur Herstellung der Antriebsstrangvorrichtung wird das aus dem eisenhaltigen Material bestehende, als Verbindungselement ausgebildete Element 12a in das aus dem als Leichtmetall ausgebildeten Material bestehende zweite Bauteil 11a eingegossen, um eine formschlüssige Verbindung zwischen dem zweiten Bauteil 11a und dem Verbindungselement herzustellen. Um das eingegossene Element 12a an das erste Bauteil 10a anzubinden, wird das eingegossene Element 12a in der Art eingegossen, dass dieses axial beidseitig aus dem Material des zweiten Bauteils 11a herausragt. Um das aus dem als Leichtmetall ausgebildeten Material bestehende zweite Bauteils 11a und das aus dem eisenhaltigen Material bestehende erste Bauteil 10a drehmomentübertragend miteinander zu verbinden, wird die erste axial herausragende Seite 22a des in das zweite Bauteil 11a eingegossenen Elements 12a mit dem ersten Bauteil 11a stoffschlüssig verbunden. Dazu wird das eingegossene Element 12a und das erste Bauteil 10a verschweißt.

Zur Montage werden die inneren Bauteile 18a, 19a, 20a, 21a in einer Vormontage in dem ersten Bauteil 10a und dem zweiten Bauteil 11a vormontiert, bevor das erste Bauteil 10a und das eingegossene Element 12a stoffschlüssig miteinander verbunden werden. Nach der Vormontage der inneren Bauteile 18a, 19a, 20a, 21a wird ein richtiges Axialspiel zwischen dem ersten Bauteil 10a und dem zweiten Bauteil 11a eingestellt und daraufhin unter Verzicht von Spielausgleichselementen das erste Bauteil 10a und das eingegossene Element 12a stoffschlüssig miteinander verbunden. Die innerhalb des ersten Bauteils 10a und des zweiten Bauteils 11a angeordneten Bauteile 18a, 19a, 20a, 21a werden somit zuerst axial mit einem richtigen Spiel zueinander eingestellt und erst dann wird das erste Bauteil 10a und das eingegossene Element 12a ohne Spielausgleichselemente miteinander verschweißt. Es werden somit keine Spielausgleichselemente, wie Einstellscheiben, benötigt.

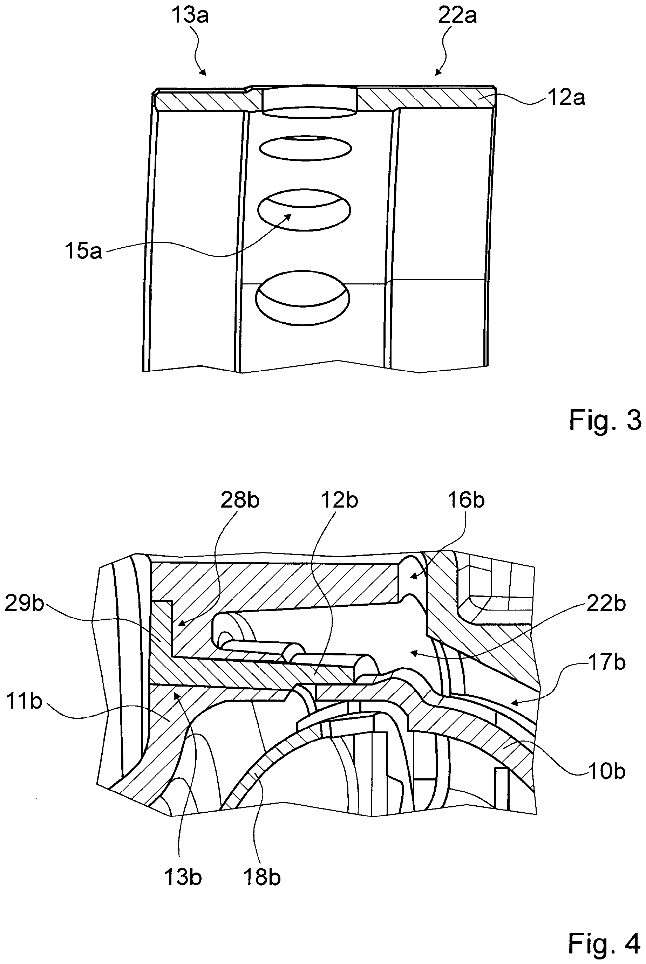

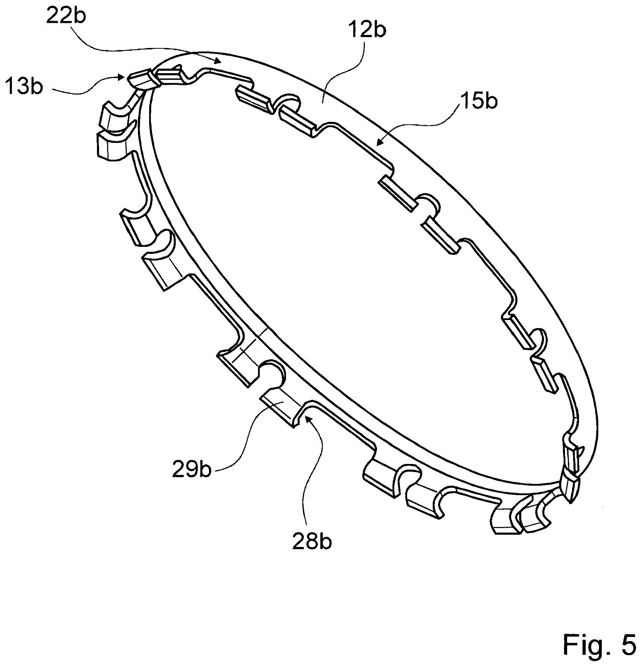

In den Figuren 4 und 5 ist ein weiteres Ausführungsbeispiel der Erfindung gezeigt. Die nachfolgende Beschreibung beschränkt sich im Wesentlichen auf die Unterschiede zwischen den Ausführungsbeispielen, wobei bezüglich gleichbezeichneter Bauteile, insbesondere in Bezug auf Bauteile mit gleichen Bezugszeichen, grundsätzlich auch auf die Figuren und/oder die Beschreibung des anderen Ausführungsbeispiels der Figuren 1 bis 3 verwiesen werden kann. Zur Unterscheidung der Ausführungsbeispiele ist der Buchstabe a in den Bezugszeichen des Ausführungsbeispiels in den Figuren 1 bis 3 durch den Buchstaben b in den Bezugszeichen des Ausführungsbeispiels der Figuren 4 und 5 ersetzt.

In den Figuren 4 und 5 ist ein zweites Ausführungsbeispiel einer Antriebsstrangvorrichtung für ein Kraftfahrzeug dargestellt. Die Antriebsstrangvorrichtung weist ein erstes Bauteil 10b, das aus einem überwiegend eisenhaltigen Material besteht, ein drehmomentübertragend mit dem ersten Bauteil 10b verbundenes zweites Bauteil 11b, das aus einem als Leichtmetall ausgebildeten Material besteht, und ein in das zweite Bauteil 11b eingegossenes Element 12b, das aus einem überwiegend eisenhaltigen Material besteht, auf, wobei das eingegossene Element 12b als ein Verbindungselement ausgebildet ist, welches zur Herstellung der drehmomentübertragenden Verbindung mit dem ersten Bauteil 10b stoffschlüssig verbunden ist. Dabei bildet das erste Bauteil 10b einstückig ein Pumpenrad eines Drehmomentwandlers 17b und das zweite Bauteil 11b einstückig eine Schöpfvorrichtung 16b und einstückig einen Außenlamellenträger aus. Das als Gehäuse ausgebildete erste Bauteil 10b und das als Gehäuse ausgebildete zweite Bauteil 11b nehmen ferner weitere Bauteile 18b auf.

Im Unterschied zu dem vorherigen Ausführungsbeispiel ragt das eingegossene Element 12b axial einseitig aus dem Material des zweiten Bauteils 11a heraus. Das eingegossene Element 12b weist eine in dem zweiten Bauteil 11b eingegossene Seite 13b und eine axial aus dem Material des zweiten Bauteils 11b herausragende Seite 22b auf. Die axial herausragende Seite 22b des eingegossenen Elements 12b ist zur stoffschlüssigen Anbindung an das erste Bauteil 10b vorgesehen. Mit der axial herausragenden Seite 22b ist das eingegossene Element 12b mit dem ersten Bauteil 10b stoffschlüssig verbunden. Die axial gegenüberliegende, eingegossene Seite 13b des eingegossenen Elements 12b weist einen Hinterschnitt 28b auf. Der Hinterschnitt 28b erstreckt sich bezüglich einer Rotationsachse des ersten Bauteils 10b und des zweiten Bauteils 11b radial nach außen. Der Hinterschnitt 28b weist mehrere Zähne 29b auf, die paarweise gleichmäßig um einen Umfang des eingegossenen Elements 12b verteilt angeordnet sind. Das eingegossene Element 12b weist weiter Materialfehlstellen 15b auf, die in einem eingegossenen Zustand von dem Material des zweiten Bauteils 11b ausgefüllt sind. Die Materialfehlstellen 15b sind im Unterschied zu dem vorherigen Ausführungsbeispiel als Langlöcher ausgebildet, die in eine der herausragenden Seite 22b abgewandte Richtung axial geöffnet sind.

## Patentansprüche

1. Antriebsstrangvorrichtung für ein Kraftfahrzeug, mit einem ersten Bauteil (10a; 10b), einem drehmomentübertragend mit dem ersten Bauteil (10a; 10b) verbundenen zweiten Bauteil (11a; 11b), das zumindest im Wesentlichen aus einem als Leichtmetall ausgebildeten Material besteht, und zumindest einem wenigstens teilweise in das zweite Bauteil (11a; 11b) eingeschlossenen Element (12a; 12b), das zumindest im Wesentlichen aus einem überwiegend eisenhaltigen Material besteht, wobei das eingeschlossene Element (12a; 12b) als ein Verbindungselement ausgebildet ist, welches zur Herstellung der drehmomentübertragenden Verbindung mit dem ersten Bauteil (10a; 10b) stoffschlüssig verbunden ist, und wobei das erste Bauteil (10a; 10b) und/oder das zweite Bauteil (11a; 11b) zumindest teilweise ein Gehäuse ausbilden, und das eingeschlossene Element (12a) axial beidseitig aus dem Material des zweiten Bauteils (11a) herausragt , **dadurch gekennzeichnet, dass** zumindest eine axial aus dem Material des zweiten Bauteils (11a) herausragende Seite (13a) des eingeschlossenen Elements (12a) wenigstens ein Wuchtelement (14a) und/oder wenigstens eine Wuchtausnehmung aufweist.

2. Antriebsstrangvorrichtung nach Anspruch 1,
**dadurch gekennzeichnet, dass**
das eingeschlossene Element (12a; 12b) zumindest eine Materialfehlstelle (15a; 15b) aufweist, die in einem eingeschlossenen Zustand von dem Material des zweiten Bauteils (11a; 11b) zumindest im Wesentlichen ausgefüllt ist.

3. Antriebsstrangvorrichtung nach Anspruch 1 oder 2,
**dadurch gekennzeichnet, dass**
das zweite Bauteil (11a; 11b) zumindest teilweise eine Schöpfvorrichtung (16a; 16b) ausbildet, die dazu vorgesehen ist, ein Schmier- und/oder Kühlmittel zu schöpfen.

4. Antriebsstrangvorrichtung nach Anspruch 3,
**dadurch gekennzeichnet, dass**
die Schöpfvorrichtung (16a; 16b) radial außerhalb des eingeschlossenen Elements (12a; 12b) angeordnet ist.

5. Antriebsstrangvorrichtung nach einem der vorhergehenden Ansprüche,
**dadurch gekennzeichnet, dass**
das erste Bauteil (10a; 10b) zumindest teilweise ein Pumpenrad eines Drehmomentwandlers (17a; 17b) ausbildet.

6. Antriebsstrangvorrichtung nach einem der vorhergehenden Ansprüche,
**dadurch gekennzeichnet, dass**
das zweite Bauteil (11a; 11b) zumindest teilweise einen Außenlamellenträger ausbildet.

7. Herstellverfahren für eine Antriebsstrangvorrichtung nach einem der vorhergehenden Ansprüche, bei dem ein erstes Bauteil (10a; 10b) und ein zweites Bauteil (11a; 11b), das zumindest teilweise aus einem als Leichtmetall ausgebildeten Material hergestellt ist, drehmomentübertragend miteinander verbunden werden und zumindest ein zumindest teilweise aus einem überwiegend eisenhaltigen Material hergestelltes Element (12a; 12b) in das erste Bauteil (10a; 10b) zumindest teilweise eingeschlossen wird, wobei zur Herstellung der drehmomentübertragenden Verbindung das erste Bauteil (10a; 10b) und das eingeschlossene Element (12a; 12b) stoffschlüssig miteinander verbunden werden.

8. Herstellverfahren nach Anspruch 7,
**dadurch gekennzeichnet, dass**
das erste Bauteil (10a; 10b) und/oder das zweite Bauteil (11a; 11b) wenigstens ein drittes Bauteil (18a, 19a, 20a, 21a; 18b) aufnehmen, wobei nach einer Vormontage des wenigstens einen dritten Bauteils (18a, 19a, 20a, 21a; 18b) ein Axialspiel zwischen dem ersten Bauteil (10a; 10b) und dem zweiten Bauteil (11a; 11b) eingestellt wird und unter Verzicht von Ausgleichselementen das erste Bauteil (10a; 10b) und das eingeschlossene Element (12a; 12b) stoffschlüssig miteinander verbunden werden.

## Claims

1. Drive train device for a motor vehicle with a first component (10a, 10b), with a second component (11a, 11b), which is connected to the first component (10a, 10b) in a torque-transmitting manner and consists at least substantially of a material represented by light metal, and with at least one element (12a, 12b), which is at least partially embedded in the second component (11a, 11b) and consists at least substantially of a predominantly ferrous material, wherein the embedded element (12a, 12b) is designed as a connecting element connected to the first component (10a, 10b) by adhesive force for establishing the torque-transmitting connection, and wherein the first component (10a, 10b) and/or the second component (11a, 11b) at least partially form(s) a housing and the embedded element (12a) axially projects on both sides from the material of the second component (11a)
**characterised in that**
at least one side (13a) of the embedded element (12a) axially projecting from the material of the second component (11a) has at least one balancing element (14a) and/or at least one balancing recess.

2. Drive train device according to claim 1,
**characterised in that**
the embedded element (12a, 12b) has at least one material void (15a, 15b), which is at least substantially filled by the material of the second component (11a, 11b) in an embedded state.

3. Drive train device according to claim 1 or 2,
**characterised in that**
the second component (11a, 11b) at least partially forms a scooping device (16a, 16b), which is provided to scoop a lubricant and/or a coolant.

4. Drive train device according to claim 3,
**characterised in that**
the scooping device (16a, 16b) is located radially outside the embedded element (12a, 12b).

5. Drive train device according to any of the preceding claims,
**characterised in that**
the first component (10a, 10b) at least partially forms an impeller of a torque converter (17a, 17b)

6. Drive train device according to any of the preceding claims,
**characterised in that**
the second component (11a, 11b) at least partially forms an outer disc carrier.

7. Production method for a drive train device according to any of the preceding claims, in which a first component (10a, 10b) and a second component (11a, 11b), which is at least partially produced of a material represented by light metal, are connected to each other in a torque-transmitting manner and at least one element (12a, 12b), which is at least partially made of a predominantly ferrous material, is at least partially embedded in the first component (10a, 10b), wherein the first component (10a, 10b) and the embedded element (12a, 12b) are connected to each other by adhesive force for establishing the torque-transmitting connection.

8. Production method according to claim 7,
**characterised in that**
the first component (10a, 10b) and/or the second component (11a, 11b) accommodate(s) at least one third component (18a, 19a, 20a, 21a; 18b), wherein, following a pre-assembly of the at least one third component 18a, 19a, 20a, 21a; 18b), an axial play is adjusted between the first component (10a, 10b) and the second component (11a, 11b) and the first component (10a, 10b) and the embedded element (12a, 12b) are connected to each other by adhesive force without the use of balancing elements.

## Revendications

1. Groupe motopropulseur pour un véhicule automobile, comprenant un premier composant (10a, 10b), un deuxième composant (11a, 11b) relié au premier composant (10a, 10b) par transmission de couple de rotation, qui est constitué au moins sensiblement d'un matériau conçu sous la forme de métal léger, et au moins un élément (12a, 12b) enfermé au moins partiellement dans le deuxième composant (11a, 11b), qui est constitué au moins sensiblement d'un matériau contenant principalement du fer, l'élément enfermé (12a, 12b) étant conçu sous la forme d'un élément de liaison, qui pour la fabrication de la liaison par transmission de couple de rotation est relié au premier composant (10a, 10b) par liaison de matière et le premier composant (10a, 10b) et/ou le deuxième composant (11a, 11b) formant au moins en partie un boîtier et l'élément enfermé (12a) fait saillie axialement de chaque côté du matériau du deuxième composant (11a), **caractérisé en ce qu'**au moins une face (13a) de l'élément enfermé (12a), en saillie axialement en matériau du deuxième composant (11a) présente au moins un élément d'équilibre (14a) et/ou au moins un évidement d'équilibre.

2. Groupe motopropulseur selon la revendication 1, **caractérisé en ce que** l'élément enfermé (12a, 12b) présente au moins un point exempt de matière (15a, 15b) qui est rempli dans un état fermé au moins sensiblement du matériau du deuxième composant (11A, 11b).

3. Groupe motopropulseur selon la revendication 1 ou 2, **caractérisé en ce que** le deuxième composant (11a, 11b) forme au moins en partie un dispositif de puisage (16a, 16b) qui sert à puiser un agent de refroidissement et/ou un agent de lubrification.

4. Groupe motopropulseur selon la revendication selon la revendication 3, **caractérisé en ce que** le dispositif de puisage (16a, 16b) est disposé radialement à l'extérieur de l'élément enfermé (12a, 12b).

5. Groupe motopropulseur selon l'une quelconque des revendications précédentes, **caractérisé en ce que** le premier composant (10a, 10b) forme au moins en partie une roue de pompe d'un convertisseur de couple (17a, 17b).

6. Groupe motopropulseur selon l'une quelconque des revendications précédentes, **caractérisé en ce que** le deuxième composant (11a, 11b) forme au moins en partie un support de palettes externe.

7. Procédé de fabrication d'un groupe motopropulseur selon l'une quelconque des revendications précédentes, un premier composant (10a, 10b) et un deuxième composant (11a, 11b), qui au moins en partie est fabriqué à partir d'un matériau conçu sous la forme de métal léger, sont reliés l'un à l'autre par transmission de couple de rotation et au moins un élément (12a, 12b) fabriqué au moins en partie d'un matériau contenant principalement du fer est enfermé au moins en partie dans le premier composant (10a, 10b), pour la fabrication de la liaison par transmission de couple de rotation le premier composant (10a, 10b) et l'élément enfermé (12a, 12b) étant reliés l'un à l'autre par liaison de matière.

8. Procédé de fabrication selon la revendication 7, **caractérisé en ce que** le premier composant (10a, 10b) et/ou le deuxième composant (11A, 11b) logent au moins un troisième composant (18a, 19a, 20a, 21a, 18b), après un montage préalable dudit troisième composant (18a, 19a, 20a, 21a, 18b) un jeu axial est réglé entre le premier composant (10a, 10b) et le deuxième composant (11a, 11b) et en renonçant aux éléments de compensation le premier composant (10a, 10b) et l'élément enfermé (12a, 12b) étant reliés l'un à l'autre par liaison de matière.
